# FASCICULE DE BREVET EUROPEEN

(11) **EP 3 648 205 B1**
(45) Date de publication et mention de la délivrance du brevet: **17.02.2021**
(21) Numéro de dépôt: 19203587.1
(22) Date de dépôt: 16.10.2019
(51) Int. Cl.: H01M 4/133, H01M 4/134, H01M 4/40, H01M 4/583, H01M 4/62, H01M 6/16, H01M 4/02

(54) **GÉNÉRATEUR ÉLECTROCHIMIQUE AU LITHIUM ET AU FLUORURE DE CARBONE COMPRENANT UN MATÉRIAU D'ÉLECTRODE NÉGATIVE SPÉCIFIQUE**
ELEKTROCHEMISCHER GENERATOR AUF LITHIUM- UND FLUORKOHLENWASSERSTOFF-BASIS, DER EIN SPEZIFISCHES NEGATIVES ELEKTRODENMATERIAL UMFASST
LITHIUM AND CARBON FLUORIDE ELECTROCHEMICAL GENERATOR COMPRISING A SPECIFIC NEGATIVE ELECTRODE MATERIAL

(30) Priorité: 29.10.2018 FR 1860014
(43) Date de publication de la demande: 06.05.2020
(73) Titulaire: Commissariat à l'énergie atomique et aux énergies alternatives, 75015 Paris (FR)
(72) Inventeur: CHAVILLON, Benoît, 38054 GRENOBLE CEDEX 09 (FR); INVERNIZZI, Ronan, 38054 GRENOBLE CEDEX 09 (FR); MAYOUSSE, Eric, 38054 GRENOBLE CEDEX 09 (FR)
(74) Mandataire: Brevalex

(56) Documents cités:
- US-A- 5 558 962
- US-A1- 2010 156 353
- KEISTER P ET AL: "PERFORMANCE OF LITHIUM ALLOY/LITHIUM AND CALCIUM/LITHIUM ANODES IN THIONYL CHLORIDE CELLS", JOURNAL OF POWER SOURCES, ELSEVIER SA, CH, vol. 15, no. 4, 15 août 1985 (1985-08-15), pages 239-244, XP001271109, ISSN: 0378-7753

## Description

### DOMAINE TECHNIQUE

La présente invention a trait à un générateur électrochimique au lithium du type lithium-fluorure de carbone comprenant, au sein d'une cellule, un matériau d'électrode négative spécifique qui présente des propriétés électrochimiques efficaces tout en pouvant présentant une épaisseur d'électrode plus fine qu'une électrode comprenant uniquement du lithium métallique et présentant ainsi un intérêt tout particulier pour les applications de puissance.

Le domaine de l'invention peut être défini comme celui des dispositifs de stockage d'énergie, en particulier celui des générateurs électrochimiques au lithium.

### ETAT DE LA TECHNIQUE ANTERIEURE

Le document US 5 558 962 A (MARINCIC NIKOLA [US] ET AL) (1996-09-24) divulgue:
une batterie dont la cathode comprend un fluorure de carbone, et dont l'anode comprend du lithium, du sodium, du calcium ou un alliage de ceux-ci.

Les documents US 2010/156353 A1 (IYER SUBRAMANIAN [US] ET AL) (2010-06-24)
et KEISTER P ET AL: "PERFORMANCE OF LITHIUM ALLOY/LITHIUM AND CALCIUM/LITHIUM ANODES IN THIONYL CHLORIDE CELLS", JOURNAL OF POWER SOURCES, ELSEVIER SA, CH, vol. 15, no. 4, 1 août 1985 (1985-08-01), pages 239-244, XP001271109, ISSN: 0378-7753
divulguent des des anodes pour batterie comportant des alliages Li-Ca

Les dispositifs de stockage d'énergie sont classiquement des générateurs électrochimiques fonctionnant sur le principe de cellules électrochimiques aptes à délivrer un courant électrique grâce à la présence dans chacune d'entre elles d'un couple d'électrodes (respectivement, une électrode positive et une électrode négative) séparé par un électrolyte, les électrodes comprenant des matériaux spécifiques aptes à réagir selon une réaction d'oxydoréduction, moyennant quoi il y a production d'électrons à l'origine du courant électrique et productions d'ions qui vont circuler d'une électrode à l'autre par le biais d'un électrolyte.

Des dispositifs de ce type peuvent être des générateurs électrochimiques fonctionnant sur l'utilisation de lithium métallique au niveau de l'électrode négative et d'un fluorure de carbone au niveau de l'électrode positive. Le fonctionnement d'une cellule d'un générateur électrochimique de ce type se base, plus précisément, sur une réduction du fluorure de carbone en carbone à l'électrode positive par les ions Li⁺ présents dans l'électrolyte et provenant de l'électrode négative (formant ainsi du LiF) et sur une oxydation du lithium métallique à l'électrode négative, lors du processus de décharge, les réactions se produisant aux électrodes pouvant être symbolisées par les équations électrochimiques suivantes :
*à l'électrode positive :

   (CF)ₓ + xe⁻ + xLi⁺ → xC + xLiF
*à l'électrode négative:

   Li₍ₛ₎ → Li⁺ + e⁻
la réaction globale pouvant être symbolisée par l'équation électrochimique suivante :

(CF)ₓ + xLi → xC + xLiF

cette réaction étant irréversible.

La tension de cellule et la capacité du système dépendent directement du taux de fluoration du fluorure de carbone. A titre d'exemple, plus le taux de fluoration est important (soit dit en d'autres termes, plus x est proche de 1), plus la capacité de matériau sera proche de sa valeur maximale (soit 865 Ah/kg).

Par ailleurs, les caractéristiques principales de ce type de générateurs électrochimiques sont les suivantes :
- une tension en circuit ouvert variant de 2,82 à 3,30 V ;
- une densité d'énergie massique théorique importante (d'environ 2000 Wh/kg selon la tension de cellule) ;
- des courbes de décharge présentant un plateau horizontal ;
- une température d'utilisation s'échelonnant de -40 à +130°C ; et
- une faible autodécharge (< 2% par an).

Le lithium métallique, qui constitue le matériau actif de l'électrode négative, est un matériau utilisable dans la plupart des systèmes tant son énergie massique et volumique est importante. En effet, le lithium présente une densité de 0,534 g/cm³ et une énergie massique de 3861 mAh/g ainsi qu'une densité d'énergie volumique de 2061 mAh/cm³. Ces valeurs restent très élevées par rapport à celles obtenues avec d'autres matériaux d'électrode négative, notamment grâce à la réaction Li → Li⁺ + e⁻, cette réaction impliquant l'échange d'un seul électron par atome de lithium, lequel est très léger et générant ainsi une quantité d'énergie importante pour un faible rapport volume/masse.

L'un des inconvénients lié à l'utilisation du lithium est dû, d'une part, à la formation possible de peroxyde de lithium, lors des processus de décharge et, d'autre part, à la formation éventuelle de dendrites de lithium, lors des processus de charge répétés, qui peuvent court-circuiter le générateur et l'endommager.

Par ailleurs, le lithium peut poser des problèmes sécuritaires, du fait de sa température de fusion de 180°C et peut présenter des difficultés de manipulation pour la fabrication des électrodes négatives.

En effet, le lithium est un métal très réactif notamment lorsqu'il est soumis à un environnement comportant de l'eau, de l'azote et/ou de l'oxygène et présente une capacité d'adhérence sur tous types de métaux ou alliages, tels que l'inox, l'acier voire même sur certains polymères fluorés. Ainsi, il peut s'avérer difficile à manipuler et à mettre en forme, par exemple, par laminage ou extrusion sauf à prendre des précautions particulières, notamment en travaillant sous atmosphère neutre et dénuée d'humidité et/ou en travaillant avec des outils revêtus d'une couche de polymère non réactif, tel que du polyéthylène basse densité.

Enfin, pour une utilisation dans des générateurs électrochimiques fonctionnant avec du fluorure de carbone à l'électrode positive, il peut être intéressant d'utiliser pour constituer l'électrode négative des feuillards de lithium très fins, par exemple, d'une épaisseur allant de 10 à 50 µm en vue notamment d'augmenter la densité de puissance. Toutefois, une telle épaisseur est impossible à atteindre avec des laminoirs standards et lorsque de tels feuillards sont disponibles dans le commerce, ils sont très onéreux, même lorsqu'ils sont déjà prélaminés sur des collecteurs de courant (par exemple, un feuillard de cuivre).

Aussi, au vu des inconvénients mentionnés ci-dessus et notamment ceux relatifs à la difficulté de manipulation de lithium pour réaliser des électrodes négatives de faibles épaisseurs, les auteurs de la présente invention se sont fixé pour objectif de proposer un nouveau type de générateur électrochimique fonctionnant avec du fluorure de carbone à l'électrode positive et comprenant une électrode négative spécifique.

### EXPOSÉ DE L'INVENTION

Ainsi, l'invention a trait à un générateur électrochimique comprenant au moins une cellule électrochimique comprenant une électrode positive comprenant, comme matériau actif, un fluorure de carbone; une électrode négative et un électrolyte conducteur d'ions lithium disposé entre ladite électrode négative et ladite électrode positive, caractérisé en ce que l'électrode négative comprend, comme matériau actif, un alliage de lithium et de calcium, dans lequel le calcium est présent dans l'alliage à hauteur de 2 à 34% atomique.

Avant d'entrer plus en détail dans l'exposé de cette invention, nous précisons les définitions suivantes.

Par % atomique, on entend, classiquement, dans ce qui précède et ce qui suit, le rapport correspondant au rapport du (nombre total d'atomes de calcium/nombre total d'atomes de l'alliage)*100.

Par électrode positive, on entend, classiquement, dans ce qui précède et ce qui suit, l'électrode qui fait office de cathode, quand le générateur électrochimique débite du courant (c'est-à-dire lorsqu'il est en processus de décharge).

Par électrode négative, on entend, classiquement, dans ce qui précède et ce qui suit, l'électrode qui fait office d'anode, quand le générateur électrochimique débite du courant.

Par matériau actif de l'électrode négative, on entend, classiquement, dans ce qui précède et ce qui suit, le matériau qui est directement impliqué dans la réaction d'oxydation se déroulant au niveau de l'électrode négative, ce matériau actif étant, dans le cadre de cette invention, un alliage de lithium et de calcium.

Par matériau actif de l'électrode positive, on entend, classiquement, dans ce qui précède et ce qui suit, le matériau qui est directement impliqué dans la réaction de réduction se déroulant au niveau de l'électrode positive, ce matériau actif étant, dans le cadre de cette invention, un fluorure de carbone.

L'électrode négative comportant un tel matériau actif peut être facilement préparée par lamination et présenter des épaisseurs faibles compatibles pour obtenir une amélioration de la densité de puissance.

Plus spécifiquement, l'électrode négative peut être constituée uniquement du matériau actif, qui est l'alliage de lithium et de calcium tel que mentionné ci-dessus.

D'un point de vue structural, l'électrode négative peut se présenter sous forme d'une feuille ou plaque présentant une épaisseur allant de 5 à 200 µm, plus spécifiquement de 20 à 100 µm.

Avantageusement, l'alliage de lithium et de calcium constitutif du matériau actif de l'électrode négative est un alliage comportant exclusivement du lithium et du calcium, ce qui signifie que l'alliage comporte du calcium à hauteur de 2 à 34 % atomique et du lithium à hauteur de 66 à 98% atomique.

Plus spécifiquement, il peut être un alliage de lithium comportant du calcium à hauteur de 2 à 15% atomique (ce qui signifie, en d'autres termes, que, lorsque l'alliage de lithium et de calcium comporte exclusivement du lithium et du calcium, le lithium est présent dans l'alliage à hauteur de 85 à 98% atomique).

Le calcium dans l'alliage de lithium et de calcium peut se présenter, en tout ou partie, sous forme de CaLi₂. Dans ce dernier cas, l'alliage de lithium et de calcium peut être considéré comme étant un matériau comprenant une matrice en lithium dont tout ou partie du calcium se trouve sous forme d'inclusions de CaLi₂ dans la matrice en lithium.

Les auteurs de la présente invention ont pu mettre en évidence qu'un tel alliage se lamine facilement et présente de bonnes propriétés mécaniques notamment en termes de résistance à la traction, notamment pour des épaisseurs telles que définies ci-dessus. Qui plus est, une électrode comprenant un tel alliage peut être produite à des coûts de fabrication moindres par rapport à une électrode présentant une même épaisseur d'électrode en lithium métallique.

Avantageusement, l'électrode négative peut être autosupportée, c'est-à-dire qu'elle ne nécessite pas d'être apposée sur un support pour être utilisée dans le générateur électrochimique de l'invention et, plus spécifiquement, qu'elle ne nécessite pas d'être apposée sur un collecteur de courant (ce qui signifie, autrement dit, que le générateur électrochimique est dénué de collecteur de courant au niveau de l'électrode négative). En variante, elle peut être associée à un support, par exemple, du type collecteur de courant, qui peut être un feuillard ou une grille en au moins un élément métallique conducteur de l'électricité, tel que du cuivre, du nickel, du tantale, du titane, du tungstène, lequel feuillard ou grille pouvant présenter une épaisseur allant jusqu'à 500 µm.

L'électrode positive du générateur électrochimique de l'invention comprend, comme matériau actif, un fluorure de carbone et plus spécifiquement, un matériau carboné (par exemple, du noir de graphite, du graphite) dans lequel sont intercalés des atomes de fluor.

Encore plus spécifiquement, le fluorure de carbone peut être représenté par la formule [CFx]ₙ, avec 0<x≤1 et n représentant le nombre moyen de motif pris entre crochets.

A titre d'exemple, il peut s'agir de graphite fluoré.

Le fluorure de carbone peut être préparé par réaction du fluor gazeux avec un matériau carboné.

Le fluorure de carbone peut être présent, dans l'électrode positive, à hauteur de 80 à 95% en masse par rapport à la masse totale de l'électrode positive.

En outre, l'électrode positive peut comprendre au moins un additif conducteur électronique et/ou au moins un liant, lequel peut permettre d'assurer la cohésion de l'électrode positive.

L'additif conducteur électronique peut être choisi parmi les noirs de carbone, les noirs d'acétylène, du graphite (en particulier, de la poudre de graphite), les fibres de carbone (en particulier, les fibres de carbone obtenues en phase vapeur connues sous l'abréviation VGCF), des nanotubes de carbone, du titane (en particulier, sous forme de poudre), du nickel (en particulier, sous forme de poudre ou de mousse), de l'aluminium (en particulier, sous forme de poudre), de l'acier inoxydable (en particulier sous forme de poudre) et des mélanges de ceux-ci.

Le ou les liants peuvent être, en particulier, choisis parmi les liants polymériques, tels que :
*les (co)polymères fluorés éventuellement conducteurs de protons, tels que :
   - les polymères fluorés, tels qu'un polytétrafluoroéthylène (connu sous l'abréviation PTFE), un polyfluorure de vinylidène (connu sous l'abréviation PVDF) ;
   - les copolymères fluorés, tels qu'un poly(fluorure de vinylidène-co-hexafluoropropène) (connu sous l'abréviation PVDF-HFP) ;
   - les polymères fluorés conducteurs de protons, tels que le Nafion® ;
*les polymères élastomères, tels qu'un copolymère styrène-butadiène (connu sous l'abréviation SBR), un copolymère éthylène-propylène-monomère diénique (connu sous l'abréviation EPDM) ;
*les polymères de la famille des alcools polyvinyliques ;
*les polymères cellulosiques, tel qu'une carboxyméthylcellulose sodique ; et
*les mélanges de ceux-ci.

De préférence, le liant utilisé est un liant à base d'un polymère fluoré, tel qu'un polytétrafluoroéthylène, un polyfluorure de vinylidène et les mélanges de ceux-ci, ce type de liant permettant l'obtention d'un bon réseau percolant.

En outre, l'électrode positive peut être également associée à un support destiné, comme son nom l'indique, à supporter les ingrédients susmentionnés, ce support pouvant, en outre, contribuer à assurer une bonne tenue mécanique de l'électrode et une bonne conduction électronique (auquel cas il peut être qualifié de support collecteur de courant).

On peut ainsi qualifier ce type d'électrode supportée.

Ce support peut se présenter sous forme d'une mousse, d'une grille ou encore d'une plaque et peut être en un matériau comprenant un métal ou un alliage métallique.

Il peut s'agir, tout particulièrement, d'un support en titane, d'un support en aluminium, d'un support en nickel, d'un support en tantale ou d'un support en acier inoxydable.

L'électrolyte destiné à entrer dans la constitution des générateurs électrochimiques de l'invention peut être un électrolyte conducteur d'ions lithium du type électrolyte liquide comprenant au moins un solvant organique et au moins un sel de lithium.

Plus spécifiquement, il peut comprendre :
- comme solvant(s), un ou plusieurs solvants organiques choisis parmi les solvants carbonates, les solvants éthers, les solvants amides, les solvants sulfoxides, les solvants lactones, les solvants lactames, les solvants nitriles, les solvants esters, les solvants sulfites et les mélanges de ceux-ci ;
- au moins un sel de lithium ;
- éventuellement un additif autre qu'un sel de lithium.

A titre d'exemples, le sel de lithium peut être choisi dans le groupe constitué par LiPF₆, LiClO₄, LiBF₄, LiAsF₆, LiSbF₆, LiAlCl₄, LiGaCl₄, LiC(SO₂CF₃)₃, le *bis*(trifluorométhylsulfonyl)imidure de lithium (connu sous l'abréviation LiTFSI) LiN[SO₂CF₃]₂, LiSCN, le nitrate de lithium LiNO₃, le *bis*(oxalato)borate de lithium (connu sous l'abréviation LIBOB), le *bis*(fluorosulfonyl)imidure de lithium (connu sous l'abréviation LiFSI), LiPF₃(CF₂CF₃)₃ (connu sous l'abréviation LiFAP), le trifluorométhanesulfonate de lithium LiCF₃SO₃ (connu sous l'abréviation LiTf), le fluorosulfonate de lithium LiSO₃F, LiC₆F₅SO₃, LiO₃SCF₂CF₃, LiO₂CCF₃,LiB(C₆H₅)₄ et les mélanges de ceux-ci.

Le sel de lithium peut être compris, dans l'électrolyte, à hauteur de 0,1 M à 2 M, de préférence, de 0,5 à 1,5 M.

Comme solvant organique appartenant à la famille des solvants carbonates, on peut citer le carbonate d'éthylène (connu sous l'abréviation EC), le carbonate de propylène (connu sous l'abréviation PC), le carbonate de diméthyle (connu sous l'abréviation DMC), le carbonate de diéthyle (connu sous l'abréviation DEC) et les mélanges de ceux-ci.

Comme solvant organique appartenant à la famille des solvants éthers, on peut citer le tétrahydrofurane (connu sous l'abréviation THF), le 1, 2-diméthoxyéthane (connu sous l'abréviation DME), le diglyme, le triglyme, le tétraglyme ou tétraéthylèneglycoldiméthyléther (connu sous l'abréviation TEGDME), le méthoxybenzène.

Comme solvant organique appartenant à la famille des solvants amides, on peut citer le diméthylformamide, le diméthylacétamide.

Comme solvant organique appartenant à la famille des solvants sulfoxides, on peut citer le diméthylsulfoxide (connu sous l'abréviation DMSO).

Comme solvant organique appartenant à la famille des solvants lactones, on peut citer la γ-butyrolactone, la γ-valérolactone, la δ-valérolactone, la ε-caprolactone, la γ-caprolactone.

Comme solvant organique appartenant à la famille des solvants lactames, on peut citer la N-méthyl-2-pyrrolidone (connue sous l'abréviation NMP).

Comme solvant organique appartenant à la famille des solvants nitriles, on peut citer l'acétonitrile.

Comme solvant organique appartenant à la famille des solvants esters, on peut citer l'acétate de méthyle.

Comme solvant organique appartenant à la famille des solvants sulfites, on peut citer le diméthylsulfite.

Le solvant peut être utilisé sous forme d'un seul solvant ou d'un mélange de solvants distincts (pouvant former ainsi un solvant binaire ou un solvant ternaire).

Par exemple, le solvant peut consister en un mélange de plusieurs solvants carbonates, et plus spécifiquement un mélange de trois solvants carbonates, un mélange répondant à cette spécificité étant le mélange carbonate d'éthylène/carbonate de propylène/carbonate de diméthyle.

Comme additif autre qu'un sel de lithium, il peut être ajouté un additif permettant d'améliorer certaines propriétés, par exemple, pour la maîtrise de la passivation, la diminution de l'autodécharge, l'amélioration d'une condition de fonctionnement précise (par exemple, à une température ou à un régime donné), un exemple d'additif étant le carbonate de fluoroéthylène (connu sous l'abréviation FEC).

L'électrolyte liquide susmentionné peut être amené, dans la ou les cellules électrochimiques des générateurs électrochimiques de l'invention, à imprégner un séparateur, lequel est disposé entre l'électrode positive et l'électrode négative de la cellule électrochimique.

Ce séparateur peut être en un matériau poreux apte à accueillir dans sa porosité l'électrolyte liquide.

Ce séparateur peut consister en une membrane en un matériau choisi parmi les fibres de verre (et plus, spécifiquement, un non-tissé de fibres de verre), un matériau polymérique, tel qu'un polytéréphtalate (comme un polytéréphtalate d'éthylène, connu sous l'abréviation PET), une polyoléfine (par exemple, un polyéthylène, un polypropylène), un polyalcool vinylique, un polyamide, un polytétrafluoroéthylène (connu sous l'abréviation PTFE), un polychlorure de vinyle (connu sous l'abréviation PVC), un polyfluorure de vinylidène (connu sous l'abréviation PVDF). Le séparateur peut présenter une épaisseur allant de 5 à 300 µm.

L'électrolyte peut être également un liquide ionique, par exemple, du *bis*(trifluorométhylsulfonyl)imidure de 1-méthyl-1-propylpipéridinium, du *bis*(trifluorométhylsulfonyl)imidure de 1-n-butyl-1-méthylpyrrolidinium et des mélanges de ceux-ci.

L'électrolyte peut consister également en un électrolyte solide, par exemple, une membrane céramique conductrice d'ions lithium, dénommée classiquement LISICON (correspondant à la terminologie anglaise Lithium Super lonic Conductor), cette membrane céramique pouvant être du type perovskite, tel que (La,Li)TiO₃ (connu sous l'abréviation LLTO), du type garnet, tel que Li₅La₃Ta₂O₁₂, Li₆La₃Zr₂O_{11,5}, du type phosphate, tel que Li₁₊ₓAlₓGe₂₋ₓ(PO₄)₃ avec 0<x<0,8 (connu sous l'abréviation LAGP), Li₁₊ₓTi₂₋ₓAlₓ(PO₄)₃ avec 0,25<x<0,3 et Li_{1+x+y}Ti₂₋ₓAlₓSi_{y}(PO₄)_{3-y} avec 0,2<x<0,25 et 0<y<0,05 (connu sous l'abréviation LTAP).

L'électrolyte peut être également un électrolyte polymère comprenant au moins un polymère résultant de la polymérisation d'un ou plusieurs monomères, tels que le fluorure de vinylidène, l'hexafluoropropylène, et comprenant au moins un sel de lithium, tel qu'au moins un de ceux mentionnés ci-dessus au sujet des électrolytes liquides susmentionnés.

Les générateurs électrochimiques de l'invention peuvent être inclus dans une enceinte rigide, par exemple, en acier inoxydable, en acier nickelé, en aluminium ou encore en titane ou dans une enceinte souple.

Les générateurs électrochimiques de l'invention peuvent, en outre, être adaptés à différents types de formats, tels que le format du type pile bouton, les formats cylindriques, en particulier, les formats AAA, AA, C, D et DD ; les formats bobinés ou spiralés ; le format prismatique.

Un générateur électrochimique spécifique à l'invention est un générateur électrochimique comprenant au moins une cellule électrochimique comprenant :
- une électrode négative constituée d'une feuille en alliage de lithium et de calcium comprenant une teneur en calcium de 2% atomique ou 15% atomique ;
- une électrode positive comprenant un mélange comprenant un fluorure de carbone (par exemple, à hauteur de 80% massique), du noir de carbone (par exemple, à hauteur de 10% massique) et un liant polymérique, par exemple, du polyfluorure de vinylidène (par exemple, à hauteur de 10% massique), ce mélange étant déposé sur un substrat collecteur de courant, par exemple, un feuillard d'aluminium ;
- un séparateur poreux disposé entre ladite électrode négative et ladite électrode positive, ledit séparateur étant imprégné d'un électrolyte comprenant un sel de lithium LiPF₆ dans un mélange de solvants carbonates (par exemple, un mélange ternaire de carbonate d'éthylène/carbonate de propylène/carbonate de diméthyle).

Les générateurs électrochimiques de l'invention peuvent être réalisés par des techniques classiques à la portée de l'homme du métier, par exemple, par empilements des différents éléments constitutifs du générateur électrochimique (à savoir, électrode négative, électrode positive et séparateur), cet empilement pouvant être maintenu dans un boîtier. L'alliage constitutif de l'électrode négative peut être réalisé par fusion de lithium et de calcium, par exemple, sur une plaque chauffante, à une température pouvant aller de 140 à 500°C, sous une atmosphère neutre (par exemple, une atmosphère d'argon) suivie, après mélange, d'une trempe du mélange fondu pour former rapidement l'alliage. L'alliage ainsi obtenu peut être mis sous forme d'une plaque ou feuille par laminage en vue d'entrer dans la constitution de l'électrode négative.

L'invention va maintenant être décrite, en référence à l'exemple suivant, donné à titre indicatif et non limitatif.

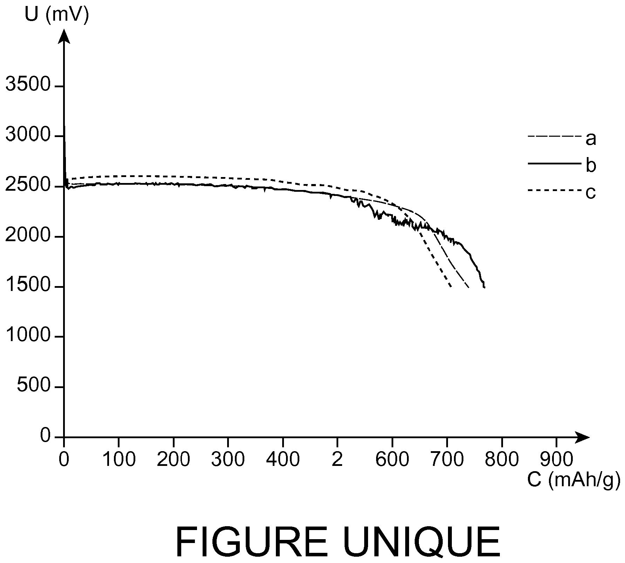

### BRÈVE DESCRIPTION DE LA FIGURE UNIQUE

La figure unique est un graphique illustrant l'évolution de la tension de décharge U (en mV) sous 250 µA à 20°C en fonction de la capacité massique C (en mAh/g) ((courbe a) pour le premier générateur électrochimique, courbe b) pour le deuxième générateur électrochimique et courbe c) pour le troisième générateur électrochimique) dans le cadre de l'exemple exposé ci-dessous.

### EXPOSÉ DÉTAILLÉ D'UN MODE DE RÉALISATION PARTICULIER

### EXEMPLE

L'exemple suivant illustre un premier générateur électrochimique conforme à l'invention sous forme d'une pile-bouton comportant :
- une électrode négative constituée d'un disque de 14 mm de diamètre et composée d'un alliage de lithium et de calcium à hauteur de 2% atomique de calcium, ladite électrode présentant une épaisseur de 100 µm et une surface de 1,54 cm² ;
- une électrode positive constituée d'un disque de 14 mm de diamètre, ladite électrode étant composée d'une couche comprenant du fluorure de carbone -CFₓ- (avec x=1) (80% massique), du polyfluorure de vinylidène (10% massique) et du noir de carbone Super P® (10% massique), cette couche étant déposée sur un feuillard en aluminium présentant une épaisseur de 20 µm et le grammage en fluorure de carbone étant compris entre 4 et 4,7 mg/cm², soit une capacité de pile comprise entre 7 et 8,3 mAh ;
- entre l'électrode négative et l'électrode positive, un séparateur du type Celgard 2400® sous forme d'un disque de 16 mm de diamètre et d'une surface de 2 cm², ledit séparateur étant imprégné d'un électrolyte constitué d'un mélange de solvants carbonates EC : PC : DMC en proportions respectives 1/1/3 et un sel de lithium LiPF₆ 1M.

Un autre générateur électrochimique conforme à l'invention (dit deuxième générateur électrochimique) a été réalisé, ce générateur électrochimique répondant aux mêmes spécificités que celle illustrée ci-dessus, si ce n'est que l'alliage de l'électrode négative comporte 15% massique de calcium.

A titre comparatif, un autre générateur électrochimique non conforme à l'invention (dit troisième générateur électrochimique) a été réalisé dans cet exemple, ce générateur électrochimique répondant aux mêmes spécificités que celle de l'invention, si ce n'est que l'électrode négative est en lithium pur.

Pour ces trois générateurs électrochimiques, il est déterminé l'évolution de la tension de décharge U (en mV) sous 250 µA à 20°C en fonction de la capacité massique C (en mAh/g de matériau actif de l'électrode positive), les résultats étant reportés sur la figure unique jointe en annexe (courbe a) pour le premier générateur électrochimique, courbe b) pour le deuxième générateur électrochimique et courbe c) pour le troisième générateur électrochimique).

De ces courbes, il ressort que, quel que le soit le matériau utilisé pour l'électrode négative, les surtensions sont équivalentes et caractéristiques de la technologie lithium-fluorure de carbone et la capacité massique du fluorure de carbone est presque entièrement restituée. L'utilisation d'un alliage de lithium et de calcium pour l'électrode négative en décharge face à une électrode positive comprenant du fluorure de carbone est donc possible sans altérer les performances par rapport à du lithium métallique non allié.

En outre, la présence de calcium dans l'alliage de lithium constitutif de l'électrode négative contribue à rendre l'alliage plus facile à laminer que du lithium pur, ce qui permet d'envisager l'utilisation d'un tel alliage pour constituer des électrodes négatives plus fines et ainsi des surfaces développées plus importantes, ce qui peut s'avérer un atout majeur dans les générateurs électrochimiques destinés à des applications de puissance.

## Revendications

1. Générateur électrochimique comprenant au moins une cellule électrochimique comprenant une électrode positive comprenant, comme matériau actif, un fluorure de carbone ; une électrode négative et un électrolyte conducteur d'ions lithium disposé entre ladite électrode négative et ladite électrode positive, **caractérisé en ce que** l'électrode négative comprend, comme matériau actif, un alliage de lithium et de calcium, dans lequel le calcium est présent dans l'alliage à hauteur de 2 à 34% atomique.

2. Générateur électrochimique selon la revendication 1, dans lequel l'électrode négative est constituée uniquement du matériau actif, qui est l'alliage de lithium et de calcium.

3. Générateur électrochimique selon la revendication 1 ou 2, dans lequel l'électrode négative se présente sous forme d'une feuille ou plaque présentant une épaisseur allant de 5 à 200 µm.

4. Générateur électrochimique selon l'une quelconque des revendications précédentes, dans lequel l'alliage de lithium et de calcium comporte exclusivement du lithium et du calcium.

5. Générateur électrochimique selon l'une quelconque des revendications précédentes, dans lequel l'alliage de lithium et de calcium est un alliage de lithium comportant du calcium à hauteur de 2 à 15% atomique.

6. Générateur électrochimique selon l'une quelconque des revendications précédentes, dans lequel le calcium dans l'alliage de lithium et de calcium se présente, en tout ou partie, sous forme de CaLi₂.

7. Générateur électrochimique selon l'une quelconque des revendications précédentes, dans lequel l'électrode négative est autosupportée.

8. Générateur électrochimique selon l'une quelconque des revendications précédentes, dans lequel le fluorure de carbone est du graphite fluoré.

9. Générateur électrochimique selon l'une quelconque des revendications précédentes, dans lequel l'électrode positive comprend au moins un additif conducteur électronique et/ou au moins un liant.

10. Générateur électrochimique selon la revendication 9, dans lequel l'additif conducteur électronique est choisi parmi les noirs de carbone, les noirs d'acétylène, du graphite, les fibres de carbone, des nanotubes de carbone, du titane, du nickel, de l'aluminium, de l'acier inoxydable et des mélanges de ceux-ci.

11. Générateur électrochimique selon la revendication 9 ou 10, dans lequel le liant est un liant polymérique.

12. Générateur électrochimique selon l'une quelconque des revendications précédentes, dans lequel l'électrolyte conducteur d'ions lithium est un électrolyte liquide comprenant au moins un solvant organique et au moins un sel de lithium.

13. Générateur électrochimique selon la revendication 12, dans lequel le ou les solvants organiques sont choisis parmi les solvants carbonates, les solvants éthers, les solvants amides, les solvants sulfoxides, les solvants lactones, les solvants lactames, les solvants nitriles, les solvants esters, les solvants sulfites et les mélanges de ceux-ci.

14. Générateur électrochimique selon la revendication 12 ou 13, dans lequel le sel de lithium est choisi dans le groupe constitué par LiPF₆, LiClO₄, LiBF₄, LiAsF₆, LiSbF₆, LiAlCl₄, LiGaCl₄, LiC(SO₂CF₃)₃, le *bis*(trifluorométhylsulfonyl)imidure de lithium LiN[SO₂CF₃]₂, LiSCN, le nitrate de lithium LiNO₃, le *bis*(oxalato)borate de lithium, le *bis*(fluorosulfonyl)imidure de lithium, LiPF₃(CF₂CF₃)₃, le trifluorométhanesulfonate de lithium LiCF₃SO₃, le fluorosulfate de lithium LiSO₃F, LiC₆F₅SO₃, LiO₃SCF₂CF₃, LiO₂CCF₃,LiB(C₆H₅)₄ et les mélanges de ceux-ci.

## Patentansprüche

1. Elektrochemischer Generator, der zumindest eine elektrochemische Zelle mit einer positiven Elektrode, die als Wirkmaterial ein Kohlenstofffluorid enthält, einer negativen Elektrode und einem lithiumionenleitenden Elektrolyten enthält, der zwischen der negativen Elektrode und der positiven Elektrode angeordnet ist, **dadurch gekennzeichnet, dass** die negative Elektrode als Wirkmaterial eine Legierung aus Lithium und Calcium enthält, wobei Calcium in der Legierung in einer Menge von 2 bis 34 Atom-% vorliegt.

2. Elektrochemischer Generator nach Anspruch 1, wobei die negative Elektrode nur aus dem Wirkmaterial, das die Lithium-Calcium-Legierung ist, besteht.

3. Elektrochemischer Generator nach Anspruch 1 oder 2, wobei die negative Elektrode in Form einer Folie oder Scheibe mit einer Dicke von 5 bis 200 µm vorliegt.

4. Elektrochemischer Generator nach einem der vorangehenden Ansprüche, wobei die Lithium-Calcium-Legierung ausschließlich Lithium und Calcium enthält.

5. Elektrochemischer Generator nach einem der vorangehenden Ansprüche, wobei die Lithium-Calcium-Legierung eine Lithiumlegierung ist, die Calcium in einer Menge von 2 bis 15 Atom-% enthält.

6. Elektrochemischer Generator nach einem der vorangehenden Ansprüche, wobei das Calcium in der Lithium-Calcium-Legierung ganz oder teilweise in Form von CaLi₂ vorliegt.

7. Elektrochemischer Generator nach einem der vorangehenden Ansprüche, wobei die negative Elektrode selbsttragend ist.

8. Elektrochemischer Generator nach einem der vorangehenden Ansprüche, wobei das Kohlenstofffluorid fluorierter Graphit ist.

9. Elektrochemischer Generator nach einem der vorangehenden Ansprüche, wobei die positive Elektrode zumindest ein elektronisch leitfähiges Additiv und/oder zumindest ein Bindemittel enthält.

10. Elektrochemischer Generator nach Anspruch 9, wobei das elektronisch leitfähige Additiv ausgewählt ist aus Ruß, Acetylenruß, Graphit, Kohlenstofffasern, Kohlenstoff-Nanoröhrchen, Titan, Nickel, Aluminium, Edelstahl und deren Gemischen.

11. Elektrochemischer Generator nach Anspruch 9 oder 10, wobei das Bindemittel ein polymeres Bindemittel ist.

12. Elektrochemische Zelle nach einem der vorangehenden Ansprüche, wobei der lithiumionenleitende Elektrolyt ein flüssiger Elektrolyt ist, der zumindest ein organisches Lösungsmittel und zumindest ein Lithiumsalz enthält.

13. Elektrochemischer Generator nach Anspruch 12, wobei das bzw. die organische(n) Lösungsmittel ausgewählt sind aus Carbonat-Lösungsmitteln, Ether-Lösungsmitteln, Amid-Lösungsmitteln, Sulfoxid-Lösungsmitteln, Lacton-Lösungsmitteln, Lactam-Lösungsmitteln, Nitril-Lösungsmitteln, Ester-Lösungsmitteln, Sulfit-Lösungsmitteln und deren Gemischen.

14. Elektrochemischer Generator nach Anspruch 12 oder 13, wobei das Lithiumsalz ausgewählt ist aus der Gruppe bestehend aus LiPF₃, LiClO₄, LiBF₄, LiAsF₆, LiSbF₆, LiAlCl₄, LiGaCl₄, LiC(SO₂CF₃)₃, Lithiumbis(trifluormethylsulfonyl)imid LiN[SO₂CF₃]₂, LiSCN, Lithiumnitrat LiNO₃, Lithiumbis(oxalato)borat, Lithiumbis(fluorosulfonyl)imidid, LiPF₃(CF₂CF₃)₃, Lithiumtrifluormethansulfonat LiCF₃SO₃, Lithiumfluorsulfat LiSO₃F, LiC₃F₅SO₃, LiO₃SCF₂CF₃, LiO₂CCF₃, LiB(C₆H₅)₄ und deren Gemischen.

## Claims

1. Electrochemical generator comprising at least one electrochemical cell comprising a positive electrode comprising, as active material, a carbon fluoride; a negative electrode and a lithium ion conducting electrolyte disposed between said negative electrode and said positive electrode, **characterised in that** the negative electrode comprises, as active material, a lithium and calcium alloy, wherein the calcium is present in the alloy at 2 to 34% atomic weight.

2. Electrochemical generator according to claim 1, wherein the negative electrode is comprised solely of the active material, which is the lithium and calcium alloy.

3. Electrochemical generator according to claim 1 or 2, wherein the negative electrode has the form of a sheet or plate having a thickness ranging from 5 to 200 µm.

4. Electrochemical generator according to any one of the preceding claims, wherein the lithium and calcium alloy exclusively includes lithium and calcium.

5. Electrochemical generator according to any one of the preceding claims, wherein the lithium and calcium alloy is a lithium alloy including calcium at 2 to 15% atomic weight.

6. Electrochemical generator according to any one of the preceding claims, wherein the calcium in the lithium and calcium alloy is present, entirely or partially, in the form of CaLi₂.

7. Electrochemical generator according to any one of the preceding claims, wherein the negative electrode is self-supported.

8. Electrochemical generator according to any one of the preceding claims, wherein the carbon fluoride is fluorinated graphite.

9. Electrochemical generator according to any one of the preceding claims, wherein the positive electrode comprises at least one electronic conducting additive and/or at least one binder.

10. Electrochemical generator according to claim 9, wherein the electronic conducting additive is chosen from carbon blacks, acetylene blacks, graphite, carbon fibres, carbon nanotubes, titanium, nickel, aluminium, stainless steel and mixtures thereof.

11. Electrochemical generator according to claim 9 or 10, wherein the binder is a polymeric binder.

12. Electrochemical generator according to any one of the preceding claims, wherein the lithium ion conducting electrolyte is a liquid electrolyte comprising at least one organic solvent and at least one lithium salt.

13. Electrochemical generator according to claim 12, wherein the organic solvent or solvents are chosen from carbonate solvents, ether solvents, amide solvents, sulphoxide solvents, lactone solvents, lactam solvents, nitrile solvents, ester solvents, sulphite solvents and the mixtures thereof.

14. Electrochemical generator according to claim 12 or 13, wherein the lithium salt is chosen from the group comprising LiPF₆, LiClO₄, LiBF₄, LiAsF₆, LiSbF₆, LiAlCl₄, LiGaCl₄, LiC(SO₂CF₃)₃, lithium *bis*(trifluoromethylsulfonyl)imide LiN[SO₂CF₃]₂, LiSCN, lithium nitrate LiNO₃, lithium *bis*(oxalato)borate, lithium bis(fluorosulfonyl)imide, LiPF₃(CF₂CF₃)₃, lithium trifluoromethanesulfonate LiCF₃SO₃, lithium fluorosulphate LiSO₃F, LiC₆F₅SO₃, LiO₃SCF₂CF₃, LiO₂CCF₃, LiB(C₆H₅)₄ and the mixtures thereof.
